# EUROPEAN PATENT SPECIFICATION

(11) **EP 4 363 158 B1**
(45) Date of publication and mention of the grant of the patent: **30.07.2025**
(21) Application number: 22735617.7
(22) Date of filing: 24.06.2022
(51) Int. Cl.: B23Q 3/06, B23Q 3/08, B25B 5/06, B25B 5/12

(54) **APPARATUS FOR CLAMPING WORKPIECES ON MACHINE TOOLS**
VORRICHTUNG ZUM SPANNEN VON WERKSTÜCKEN AUF WERKZEUGMASCHINEN
APPAREIL DE SERRAGE DE PIÈCES SUR DES MACHINES-OUTILS

(30) Priority: 02.07.2021 IT 202100017555
(43) Date of publication of application: 08.05.2024
(73) Proprietor: Hydroblock S.r.l., 42124 Reggio Emilia (RE) (IT)
(72) Inventor: ZANNI, Davide, 42124 Reggio Emilia (RE) (IT)
(74) Representative: Luppi, Emanuele
(86) International application number: PCT/IB2022/055868
(87) International publication number: WO 2023/275687

(56) References cited:
- EP-A1- 0 761 390
- CN-A- 104 889 770
- DE-U1- 29 615 157

## Description

### Technical Field

The present invention relates to an apparatus for clamping workpieces on machine tools.

### Background Art

As is well known, in large-scale production of mechanical workpieces that require machining at the machine tool, the use is widespread of highly automated systems wherein an anthropomorphic robot brings the parts to be machined to a machine tool, where special apparatuses, of the hydraulic or pneumatic type, take over the workpiece and clamp it in place to allow the machining thereof.

When the machining is finished, the aforementioned apparatuses release the machined workpiece, which is moved away once again by means of the robot.

The clamping apparatuses of traditional type are generally provided with one or more movable brackets driven by one or more hydraulic or pneumatic cylinders capable of exerting even very large clamping forces on the workpiece being machined.

This need is particularly felt, e.g. in the automotive industry, wherein the continuing need to optimize the production cycles has led to the use of tools operating at very high speeds, unloading very large forces and vibrations onto the workpiece which must be offset by the fastening systems.

Still in the automotive sector, moreover, the use is becoming increasingly common of particularly lightweight materials such as aluminum, which, however, during machining on the machine tool are unable to ensure the same strength as materials such as cast iron and steel.

Therefore, it is necessary that the clamping apparatuses, in addition to exerting a very high force, rest on the workpiece at predetermined points, with great precision and in a repeatable manner whenever a new workpiece to be machined is mounted on the machine tool; otherwise, in fact, the great force exerted by the clamping apparatus can cause the workpieces to deform, which jeopardizes the quality of machining and the risk of obtaining out-of-tolerance workpieces.

In such automated systems, the level of operational reliability of the individual components, including the apparatuses for clamping workpieces, is usually very high.

Nonetheless, it sometimes happens that the mechanical workpieces to be machined are not placed correctly and accurately and the clamping apparatuses fail to perfectly immobilize the workpiece (or do so but in the wrong position), risking compromising the entire machining operation and damaging the workpiece and/or machining tools and/or clamping apparatuses.

In this context, the fact is emphasized that, in highly automated systems, any malfunction that causes the stoppage of machining easily turns into a loss of production or, even worse, damage to the systems, with a consequent economic damage of non-negligible magnitude.

All of the above critical issues and requirements gain even greater importance in the case of clamping apparatuses having two clamping brackets operated by an individual hydraulic/pneumatic cylinder.

In fact, in this particular type of apparatus, the rod of the hydraulic/pneumatic cylinder ends up in a drive assembly which is connected to the brackets and which, in actual facts, transfers the motion of the rod to both clamping brackets. The drive assembly and the cylinder rod are rigidly connected, and the motion of the rod causes the simultaneous and synchronous displacement of the brackets and their simultaneous approach to and departure from the workpiece being machined.

It should be noted, however, that the workpiece being machined almost always has very small dimensional differences due to design tolerances and, therefore, it may happen that one bracket makes contact with the workpiece before the other.

In this case, the clamping force discharges disadvantageously to a greater extent (in some cases completely) on the bracket that first contacts the workpiece and to a lesser extent (in some cases not at all) on the other bracket; when the first bracket contacts the workpiece, in fact, its motion stops, thus interrupting the movement of the hydraulic/pneumatic cylinder's rod and of the other bracket.

The clamping of the workpiece is therefore not optimal, as the clamping force generated by the hydraulic/pneumatic cylinder is unevenly distributed over the various brackets.

It is easy to appreciate, therefore, how these particular apparatuses for clamping are susceptible to refinements aimed at improving their ability to immobilize the workpiece being machined which, as mentioned above, is crucial in order to ensure the proper execution of the entire machining operation without risk of damage to the workpiece and/or equipment.

An example of apparatus for clamping workpieces having two clamping brackets is disclosed in patent document DE29615157U1.

### Description of the Invention

The main aim of the present invention is to devise an apparatus for clamping workpieces on machine tools which enables the aforementioned upgrading to be achieved and the workpieces to be immobilized in an extremely practical and safe manner.

An additional object of the present invention is to devise an apparatus for clamping workpieces on machine tools with high reliability and precision of operation.

Not the least object of the present invention is to devise an apparatus for clamping workpieces on machine tools which allows avoiding unwanted malfunction and damage to the workpiece being machined and/or to the tools of the machine tool and/or to the workpiece movement robot and/or to the clamping apparatus itself.

Another object of the present invention is to devise an apparatus for clamping workpieces on machine tools which allows the aforementioned drawbacks of the prior art to be overcome within the framework of a simple, rational, easy-to-use and cost-effective solution.

The aforementioned objects are achieved by this apparatus for clamping workpieces on machine tools having the characteristics of claim 1.

### Brief Description of the Drawings

Other characteristics and advantages of the present invention will become more apparent from the description of a preferred, but not exclusive, embodiment of an apparatus for clamping workpieces on machine tools, illustrated by way of an indicative, yet non-limiting example, in the accompanying tables of drawings in which:

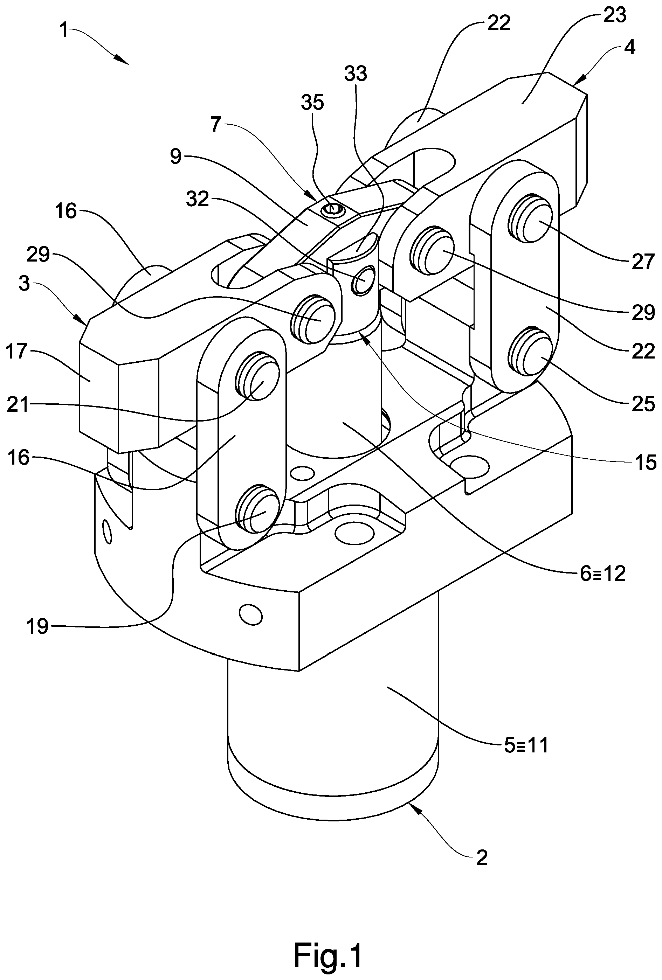

Figure 1 is an axonometric view of the apparatus according to the invention;

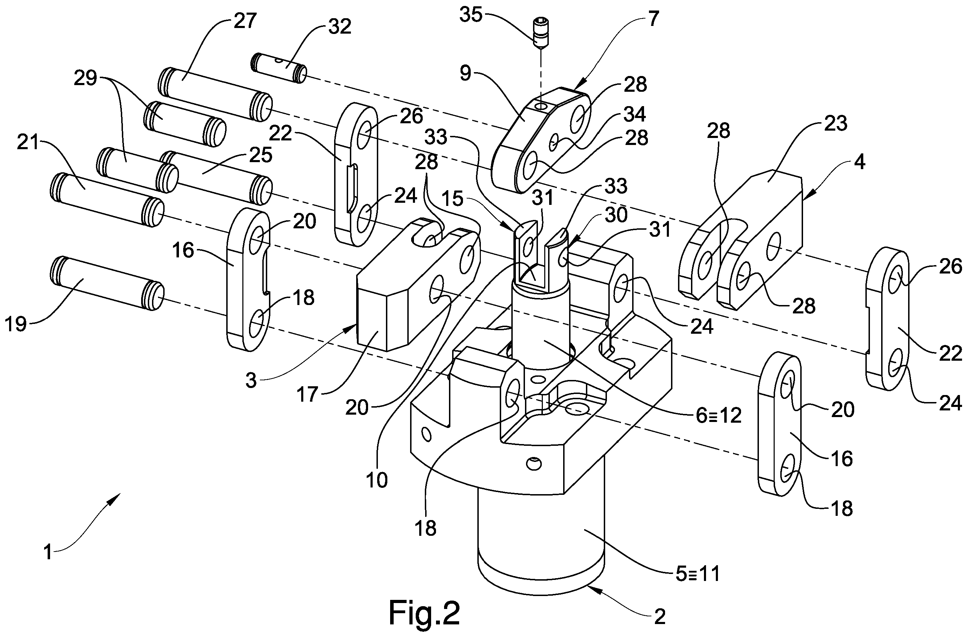

Figure 2 is an exploded view of the apparatus according to the invention;

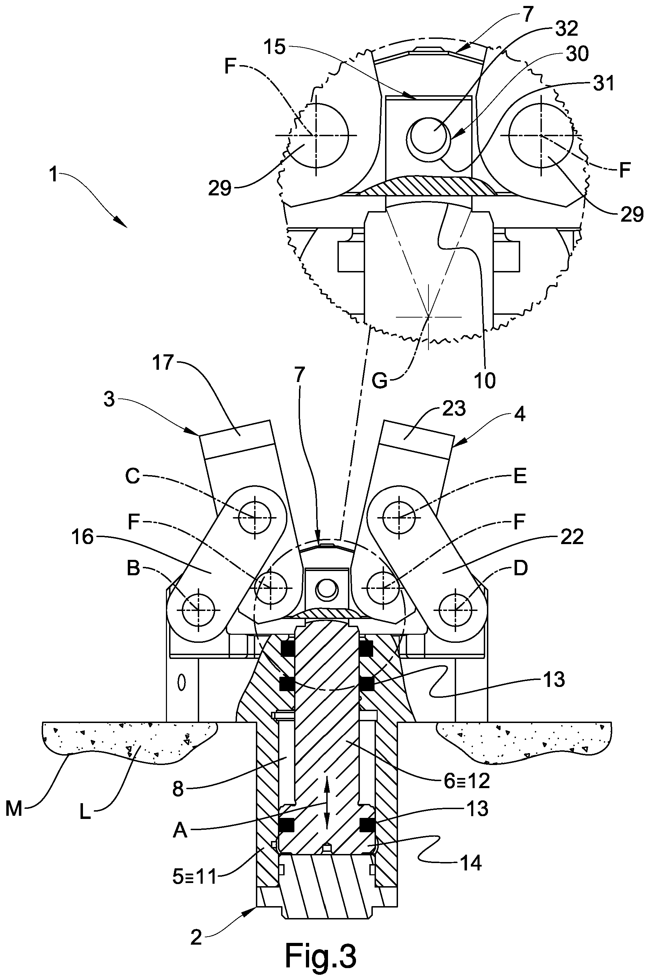

Figure 3 is a sectional view of the apparatus according to the invention in the release position;
Figure 4 is a sectional view of the apparatus according to the invention in an ideal clamping position;
Figure 5 is a sectional view of the apparatus according to the invention in a real clamping position.

### Embodiments of the Invention

With particular reference to these figures, reference numeral 1 globally indicates an apparatus for clamping workpieces on machine tools.

The apparatus 1, in particular, is intended to clamp one or more workpieces P after these have been placed on a worktop L of a machine tool M and before mechanical machining begins.

It is emphasized that the machine tool M is provided with a plurality of apparatuses 1, which are arranged in appropriate positions and quantities according to the conformation of the workpieces P and to the type of machining operations to be performed.

In the figures and in the remainder of this disclosure, reference will be made for simplicity sake to a single apparatus 1 clamping an individual workpiece P, unless otherwise stated.

The apparatus 1 comprises:
- at least one basic frame 2 attachable to the machine tool M, e.g. to its worktop L, its bedplate, or any other part of it;
- at least a first clamping assembly 3 and at least a second clamping assembly 4 associated with the basic frame 2 in a movable manner from a release position to a clamping position of the workpiece P, along a clamping stroke, and from the clamping position to the release position of the workpiece P, along a release stroke;
- at least one fluid actuator 5, 6, provided with a fixed portion 5, associated with the basic frame 2, and with a movable portion 6, associated with the fixed portion 5 in a sliding manner along a direction of sliding A and connected to a drive assembly 7 associated with the clamping assemblies 3, 4, the fluid actuator 5, 6 comprising at least one chamber 8 which can be fed with at least one pressurized fluid to simultaneously displace the clamping assemblies 3, 4 between the release position and the clamping position;
wherein the drive assembly 7 comprises at least one rocker element 9 hinged to the first clamping assembly 3 and to the second clamping assembly 4 and associated in a rotatable manner with the movable portion 6, which comprises at least one curved thrust surface 10 arranged in thrust contact against the rocker element 9 during the clamping stroke, wherein the rocker element 9 is rotatable on the curved thrust surface 10.

In the particular embodiment shown in the figures, the basic frame 2 of the apparatus 1 is arranged so that the direction of sliding A of the movable portion 6 appears to be substantially vertical, with the workpiece P being arranged above the worktop L and having an upward-facing surface on which the clamping assemblies 3, 4 rest in the clamping position.

For simplicity of exposition, in the remainder of this disclosure, reference will be made to the arrangement of the apparatus 1 shown in the figures, and, therefore, terms such as "upper", "lower", "above", "below", "to lift", "to lower" and others related to them will be understood with reference to what is shown in the figures.

It is easy to appreciate, however, that the apparatus 1 can be attached to the machine tool M with the direction of sliding A oriented differently (e.g. horizontally or obliquely), depending on how the workpiece P to be clamped is shaped and arranged.

The direction of sliding A is actually defined by the orientation of the fluid actuator 5, 6.

The fluid actuator 5, 6, e.g., comprises a cylinder 11, defining the fixed portion 5, and a rod 12, defining the movable portion 6.

The cylinder 11 of the fluid actuator 5, 6 is locked together with the basic frame 2 and, inside it, the chamber 8 is defined which can be fed with the pressurized fluid.

In the context of the present disclosure, a pressurized fluid is defined as any fluid in a liquid (and therefore ideally incompressible) or gaseous (and therefore compressible) state used as a carrier medium for the transport of energy in a hydraulic or pneumatic circuit; preferably the pressurized fluid consists of a traditional synthetic oil but alternative embodiments cannot be ruled out wherein it may be mineral oil, vegetable oil, water, air or the like.

Since the apparatus 1 has several parts in contact with the pressurized fluid, special seals are arranged at different points of the apparatus 1, which, for simplicity of representation, have been commonly identified by reference numeral 13.

To allow the movable portion 6 to displace along the direction of sliding A, the rod 12 comprises one end arranged inside the cylinder 11, which is provided with a plunger 14 sliding along the chamber 8 and on which the pressurized fluid operates, and with a free end 15 arranged outside the cylinder 11, which is connected to the rocker element 9 as will be described in more detail later in the present disclosure.

The clamping assemblies 3, 4 are arranged on the basic frame 2 on opposite sides with respect to the fluid actuator 5, 6.

In more detail, the fluid actuator 5, 6 is arranged so as to occupy a central part of the basic frame 2 while the clamping assemblies 3, 4 are arranged on opposite side parts of the basic frame 2 and with the fluid actuator 5, 6 in between.

The first clamping assembly 3 comprises:
- at least a first connecting rod 16 hinged to the basic frame 2 around a first axis of tilting B; and
- at least a first bracket 17 hinged to the first connecting rod 16 around a first axis of rotation C substantially parallel to the first axis of tilting B.

Preferably, the first clamping assembly 3 comprises two first connecting rods 16 arranged on opposite sides of the first bracket 17, so as to ensure more stable movement.

The hinging between the first connecting rods 16 and the basic frame 2 around the first axis of tilting B is defined by a series of first tilting holes 18, drilled in the first connecting rods 16 and in the basic frame 2, and by a first tilting pin 19, inserted in the first tilting holes 18 aligned with each other.

The hinging between the first connecting rods 16 and the first bracket 17 around the first axis of rotation C, on the other hand, is defined by a series of first rotational holes 20, drilled in the first connecting rods 16 and in the first bracket 17, and by a first rotational pin 21, inserted in the first rotational holes 20 aligned with each other.

The first axis of tilting B and the first axis of rotation C are substantially parallel to each other and orthogonal to the direction of sliding A.

Similarly, the second clamping assembly 4 comprises:
- at least a second connecting rod 22 hinged to the basic frame 2 around a second axis of tilting D; and
- at least a second bracket 23 hinged to the second connecting rod 22 around a second axis of rotation E substantially parallel to the second axis of tilting D.

The second clamping assembly 4 also preferably comprises two second connecting rods 22 arranged on opposite sides of the second bracket 23, so as to ensure more stable movement.

The hinging between the second connecting rods 22 and the basic frame 2 around the second axis D is defined by a series of second tilting holes 24, drilled in the second connecting rods 22 and in the basic frame 2, and by a second tilting pin 25, inserted into the second tilting holes 24 aligned with each other.

The hinging between the second connecting rods 22 and the second bracket 23 around the second axis of rotation E, on the other hand, is defined by a series of second rotational holes 26, drilled in the second connecting rods 22 and in the second bracket 23, and by a second tilting pin 27, inserted in the second rotational holes 26 aligned with each other.

The second axis of tilting D and the second axis of rotation E are substantially parallel to each other and orthogonal to the direction of sliding A.

In more detail, the second axis of tilting D and the second axis of rotation E are substantially parallel to the first axis of tilting B and to the first axis of rotation C.

Conveniently, the rocker element 9 is hinged to the first clamping assembly 3 and to the second clamping assembly 4 around axes of hinging F substantially parallel to each other and orthogonal to the direction of sliding A.

In more detail, the axes of hinging F are also substantially parallel to the axes of tilting B, D and to the axes of rotation C, E.

The hinging between the rocker element 9 and the clamping assemblies 3, 4 around the second axis of rotation E is defined by a set of hinging holes 28, drilled in the rocker element 9 and in the brackets 17, 23, and by a pair of hinging pins 29, inserted into the hinging holes 28 aligned with each other.

Advantageously, the rocker element 9 has a substantially elongated conformation, with two ending, opposite portions, which are hinged to the brackets 17, 23, and a central portion, which is connected to the movable portion 6 and is intended to be set in contact with the curved thrust surface 10.

In this regard, the fact is emphasized that the curved thrust surface 10 has a substantially cylindrical conformation, that is, it defines a portion of a cylinder with an axis of curvature G.

In this regard, the fact is emphasized that, in the context of this disclosure, by axis of curvature G is meant the central axis of the cylinder defined by the curved thrust surface 10.

Conveniently, the axis of curvature G is substantially parallel to the axes of hinging F.

In actual facts, the axes of tilting B, D, the axes of rotation C, E, the axes of hinging F and the axis of curvature G are all substantially parallel to each other and orthogonal to the direction of sliding A.

In this way, the rocker element 9 can rotate on the curved thrust surface 10 during the clamping stroke and allow the brackets 17, 23 to adapt to the actual shape and size of the workpiece P, as will be better described later on.

The rocker element 9 is associated with clearance with the movable portion 6, which comprises at least one recovery surface 30 arranged in thrust contact against the rocker element 9 during the release stroke.

The recovery surface 30 is defined by at least one connecting seat 31 formed in the movable portion 6, the rocker element 9 comprising at least one connecting pin 32 fitted with clearance in the connecting seat 31.

In other words, the connecting seat 31 is substantially larger in size than the connecting pin 32; for example, the connecting seat 31 and the connecting pin 32 may be substantially cylindrically shaped, with the radius of the connecting seat 31 being larger than the radius of the connecting pin 32 by a difference W comprised between 0.05 and 0.5 mm (i.e. clearance of 0.1-1 mm), preferably comprised between 0.2 and 0.3 mm (i.e. clearance of 0.4-0.6 mm), better still 0.25 mm (i.e. clearance of 0.5 mm).

In this way, during the clamping stroke, the curved thrust surface 10 contacts the rocker element 9 while the connecting pin 32 does not work.

Conversely, during the release stroke, the curved thrust surface 10 detaches from the rocker element 9 while the connecting seat 31 contacts the connecting pin 32 and drags it until the release position is reached.

It can be seen, in actual facts, that the particular shape of the curved thrust surface 10 and of the recovery surface 30 allows the curved thrust surface 10 to contact the rocker element 9 only during the clamping stroke, while it allows the recovery surface 30 to contact the rocker element 9 only during the release stroke.

It is also noted that, during the clamping stroke, the force transmitted by the fluid actuator 5, 6 must be significantly greater than the force transmitted during the release stroke.

In the clamping position, in fact, the fluid actuator 5, 6 must transmit to the rocker element 9, to the brackets 17, 23 and to the workpiece P a force capable of clamping the workpiece on the machine tool M which, on the contrary, is not the case in the release position; this means that the connecting pin 32, which transmits the force from the fluid actuator 5, 6 to the rocker element 9 during the release stroke, is subjected to extremely small shear forces and can therefore advantageously have very limited dimensions without the risk of unexpected breakage.

In the particular embodiment shown in the figures, the free end 15 of the rod 12 is shaped as a fork and comprises two opposite small arms 33 between which the rocker element 9 is housed.

The curved thrust surface 10 is obtained at the base of the two small arms 33 in the space defined between them.

The recovery surface 30 is, on the other hand, obtained on the two small arms 33 and defined by two connecting seats 31 running through each small arm 33 from side to side.

The connecting pin 32 is fitted to size in a cavity 34 obtained through the rocker element 9 and is clamped inside it by one or more clamping dowels 35; the length of the connecting pin 32 is greater than the length of the cavity 34, so the connecting pin 32 protrudes from both sides of the cavity 34 and fits into both connecting seats 31 obtained on the small arms 33 and arranged in alignment with the cavity 34.

As mentioned above, thanks to the curved thrust surface 10, the rocker element 9 can adapt to the actual shapes and sizes of the workpiece P; in actual facts, in the clamping position, the first clamping assembly 3, the second clamping assembly 4 and the rocker element 9 can be placed in different positions to each other depending on what is the actual shape of the workpiece P, even net of the relevant dimensional tolerances.

In this regard, it is emphasized that the first clamping assembly 3, the second clamping assembly 4 and the rocker element 9 are configured to be arranged in an ideal clamping position wherein:
- the axes of hinging F and the axes of rotation C, E are all arranged substantially coplanar and lying on an ideal reference plane X;
- the first axis of tilting B and the first axis of rotation C are arranged substantially coplanar and lying on a first ideal lying plane Y1 substantially orthogonal to the ideal reference plane X;
- the second axis of tilting D and the second axis of rotation E are arranged substantially coplanar and lying on a second ideal lying plane Y2 substantially parallel to the first ideal lying plane Y1 and substantially orthogonal to the ideal reference plane X.

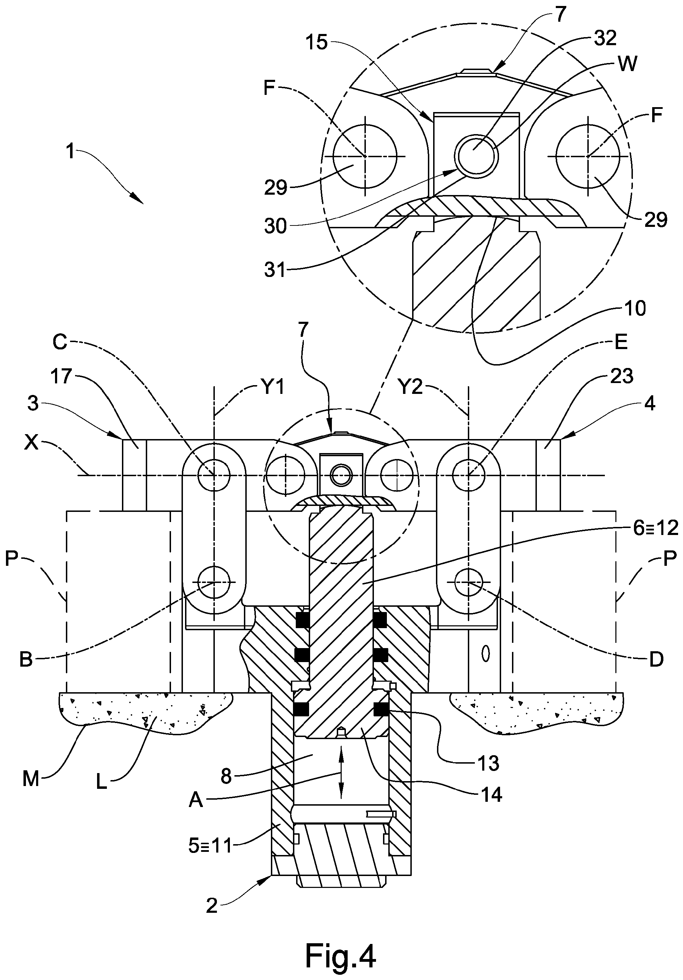

The ideal clamping position is shown in Figure 4 and represents the configuration wherein the apparatus 1 works best, since the clamping forces exerted by the brackets 17, 23 placed above the workpiece P are directed along a perfectly vertical direction, i.e., without horizontal force components that could cause an undesirable state of tensioning inside the workpiece P.

It is easy to appreciate, however, that the special expedient of providing a curved thrust surface 10 insisting on a rotatable rocker element 9 enables the apparatus 1 to operate effectively even when the workpiece P has shapes and sizes other than the nominal ones.

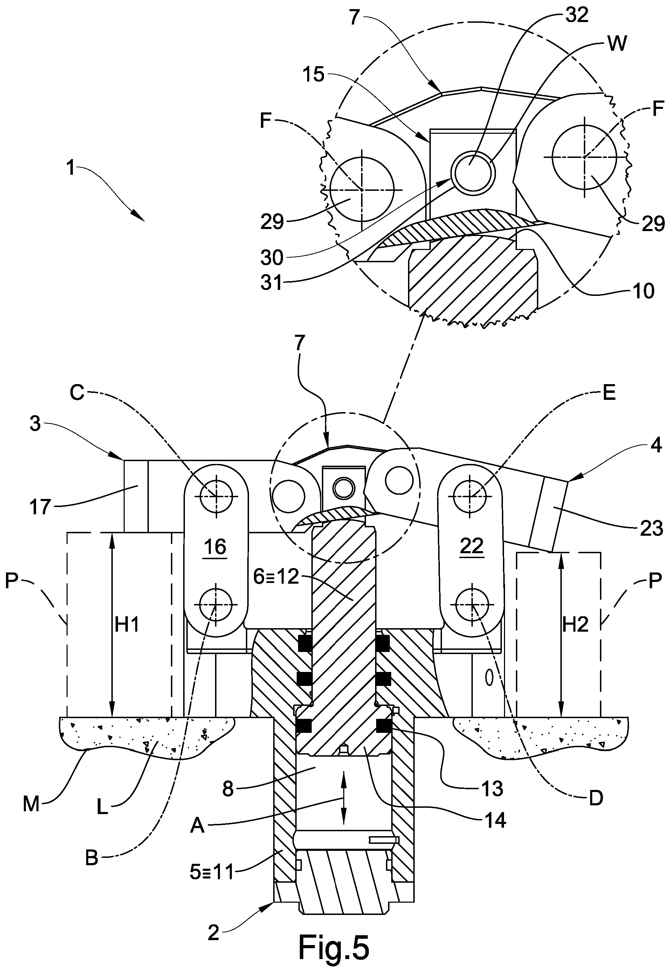

Figure 5 shows, for example, a possible actual clamping position different from the ideal clamping position shown in Figure 4 wherein the first bracket 17 rests on a part of the workpiece P having a first height H1 while the second bracket 23 rests on a part of the workpiece P having a second height H2 different from the first height H1; on both parts of the workpiece P, the apparatus 1 is able to exert a clamping force which is distributed in a substantially balanced manner.

This circumstance is also particularly advantageous when the apparatus 1 is used to clamp two different workpieces P, with the first bracket 17 resting on one workpiece P and the second bracket 23 resting on a different workpiece P.

It has in practice been ascertained that the described invention achieves the intended objects, and in particular the fact is emphasized that the apparatus according to the invention makes it possible to immobilize the workpieces being machined in an extremely practical, safe, reliable and precise manner, even under different operating conditions.

## Claims

1. Apparatus (1) for clamping workpieces on machine tools, comprising:
- at least one basic frame (2) attachable to a machine tool (M) for the machining of at least one workpiece (P);
- at least a first clamping assembly (3) and at least a second clamping assembly (4) associated with said basic frame (2) in a movable manner from a release position to a clamping position of said workpiece (P), along a clamping stroke, and from said clamping position to said release position, along a release stroke;
- at least one fluid actuator (5, 6), provided with a fixed portion (5) associated with said basic frame (2) and with a movable portion (6) associated with said fixed portion (5) in a sliding manner along a direction of sliding (A) and connected to a drive assembly (7) associated with said clamping assemblies (3, 4), said fluid actuator (5, 6) comprising at least one chamber (8) which can be fed with at least one pressurized fluid to simultaneously displace said clamping assemblies (3, 4) between said release position and said clamping position;
**characterized by** the fact that said drive assembly (7) comprises at least one rocker element (9) hinged to said first clamping assembly (3) and to said second clamping assembly (4) and associated in a rotatable manner with said movable portion (6), which comprises at least one curved thrust surface (10) arranged in thrust contact against said rocker element (9) during said clamping stroke, wherein said rocker element (9) is rotatable on said curved thrust surface (10).

2. Apparatus (1) according to claim 1, **characterized by** the fact that said rocker element (9) is hinged to said first clamping assembly (3) and to said second clamping assembly (4) around axes of hinging (F) substantially parallel to each other and orthogonal to said direction of sliding (A).

3. Apparatus (1) according to claim 2, **characterized by** the fact that said curved thrust surface (10) has a substantially cylindrical conformation with an axis of curvature (G) substantially parallel to said axes of hinging (F).

4. Apparatus (1) according to one or more of the preceding claims, **characterized by** the fact that said rocker element (9) is associated with clearance with said movable portion (6), which comprises at least one recovery surface (30) arranged in thrust contact against said rocker element (9) during said release stroke.

5. Apparatus (1) according to claim 4, **characterized by** the fact that said recovery surface (30) is defined by at least one connecting seat (31) formed in said movable portion (6), said rocker element (9) comprising at least one connecting pin (32) fitted with clearance in said connecting seat (31).

6. Apparatus (1) according to one or more of the preceding claims, **characterized by** the fact that said clamping assemblies (3, 4) are arranged on said basic frame (2) on opposite sides with respect to said fluid actuator (5, 6).

7. Apparatus (1) according to one or more of the preceding claims, **characterized by** the fact that said first clamping assembly (3) comprises:
- at least a first connecting rod (16) hinged to said basic frame (2) around a first axis of tilting (B); and
- at least a first bracket (17) hinged to said first connecting rod (16) around a first axis of rotation (C) substantially parallel to said first axis of tilting (B).

8. Apparatus (1) according to one or more of the preceding claims, **characterized by** the fact that said second clamping assembly (4) comprises:
- at least a second connecting rod (22) hinged to said basic frame (2) around a second axis of tilting (D); and
- at least a second bracket (23) hinged to said second connecting rod (22) around a second axis of rotation (E) substantially parallel to said second axis of tilting (D).

9. Apparatus (1) according to claims 7 and 8, when depending at least on claims 2 and 3, **characterized by** the fact that said axes of tilting (B, D), said axes of rotation (C, E), said axes of hinging (F) and said axis of curvature (G) are all substantially parallel to each other and orthogonal to said direction of sliding (A).

10. Apparatus (1) according to claims 7 and 8, when depending at least on claim 2, **characterized by** the fact that said first clamping assembly (3), said second clamping assembly (4) and said rocker element (9) are configured to be arranged in an ideal clamping position wherein:
- said axes of hinging (F) and said axes of rotation (C, E) are all arranged substantially coplanar and lying on an ideal reference plane (X);
- said first axis of tilting (B) and said first axis of rotation (C) are arranged substantially coplanar and lying on a first ideal lying plane (Y1) substantially orthogonal to said ideal reference plane (X);
- said second axis of tilting (D) and said second axis of rotation (E) are arranged substantially coplanar and lying on a second ideal lying plane (Y2) substantially parallel to said first ideal lying plane (Y1) and substantially orthogonal to said ideal reference plane (X).

## Patentansprüche

1. Vorrichtung (1) zum Spannen von Werkstücken auf Werkzeugmaschinen, umfassend:
- mindestens einen Grundrahmen (2), der an einer Werkzeugmaschine (M) zur Bearbeitung mindestens eines Werkstücks (P) befestigbar ist;
- mindestens eine erste Klemmanordnung (3) und mindestens eine zweite Klemmanordnung (4), die mit dem Grundrahmen (2) beweglich verbunden sind, um entlang eines Klemmhubs aus einer Freigabestellung in eine Klemmstellung des Werkstücks (P) und entlang eines Freigabehubs aus der Klemmstellung in die Freigabestellung zu gelangen;
- mindestens einen Fluidaktuator (5, 6), der mit einem festen Teil (5), der mit dem Grundrahmen (2) verbunden ist, und mit einem beweglichen Teil (6) versehen ist, der mit dem festen Teil (5) entlang einer Gleitrichtung (A) verschiebbar verbunden ist und an einer Antriebsbaugruppe (7) angeschlossen ist, die mit den Klemmanordnungen (3, 4) verbunden ist, wobei der Fluidaktuator (5, 6) mindestens eine Kammer (8) umfasst, die mit mindestens einem unter Druck stehenden Fluid beaufschlagt werden kann, um die Klemmanordnungen (3, 4) gleichzeitig zwischen der Freigabestellung und der Klemmstellung zu verschieben;
**dadurch gekennzeichnet, dass** die Antriebsbaugruppe (7) mindestens ein Wiegeelement (9) umfasst, das an der ersten Klemmanordnung (3) und an der zweiten Klemmanordnung (4) angelenkt und drehbar mit dem beweglichen Teil (6) verbunden ist, das mindestens eine gekrümmte Druckfläche (10) umfasst, die während des Klemmhubs in Druckkontakt mit dem Wiegeelement (9) angeordnet ist, wobei das Wiegeelement (9) auf der gekrümmten Druckfläche (10) drehbar ist.

2. Vorrichtung (1) nach Anspruch 1, **dadurch gekennzeichnet, dass** das Wiegeelement (9) um im Wesentlichen zueinander parallele und zu der Gleitrichtung (A) orthogonale Schwenkachsen (F) an der ersten Klemmanordnung (3) und an der zweiten Klemmanordnung (4) angelenkt ist.

3. Vorrichtung (1) nach Anspruch 2, **dadurch gekennzeichnet, dass** die gekrümmte Druckfläche (10) eine im Wesentlichen zylindrische Form mit einer Krümmungsachse (G) aufweist, die im Wesentlichen parallel zu den Schwenkachsen (F) verläuft.

4. Vorrichtung (1) nach einem oder mehreren der vorhergehenden Ansprüche, **dadurch gekennzeichnet, dass** das Wiegeelement (9) mit dem beweglichen Teil (6) in einem Freiraum angeordnet ist, das mindestens eine Rückstellfläche (30) umfasst, die während des Freigabehubs in Druckkontakt mit dem Wiegeelement (9) steht.

5. Vorrichtung (1) nach Anspruch 4, **dadurch gekennzeichnet, dass** die Rückstellfläche (30) durch mindestens einen in dem beweglichen Teil (6) ausgebildeten Verbindungssitz (31) definiert ist, wobei das Wiegeelement (9) mindestens einen Verbindungsstift (32) aufweist, der mit Spiel in den Verbindungssitz (31) eingepasst ist.

6. Vorrichtung (1) nach einem oder mehreren der vorhergehenden Ansprüche, **dadurch gekennzeichnet, dass** die Klemmanordnungen (3, 4) an dem Grundrahmen (2) auf gegenüberliegenden Seiten in Bezug auf den Fluidaktuator (5, 6) angeordnet sind.

7. Vorrichtung (1) nach einem oder mehreren der vorhergehenden Ansprüche, **dadurch gekennzeichnet, dass** die erste Klemmanordnung (3) umfasst:
- mindestens eine erste Verbindungsstange (16), die um eine erste Kippachse (B) an dem Grundrahmen (2) angelenkt ist; und
- mindestens eine erste Klammer (17), die um eine erste Drehachse (C), die im Wesentlichen parallel zu der ersten Kippachse (B) verläuft, an der ersten Verbindungsstange (16) angelenkt ist.

8. Vorrichtung (1) nach einem oder mehreren der vorhergehenden Ansprüche, **dadurch gekennzeichnet, dass** die zweite Klemmanordnung (4) umfasst:
- mindestens eine zweite Verbindungsstange (22), die um eine zweite Kippachse (D) an dem Grundrahmen (2) angelenkt ist; und
- mindestens eine zweite Klammer (23), die um eine zweite Drehachse (E), die im Wesentlichen parallel zu der zweiten Kippachse (D) verläuft, an der zweiten Verbindungsstange (22) angelenkt ist.

9. Vorrichtung (1) nach den Ansprüchen 7 und 8, sofern sie mindestens von den Ansprüchen 2 und 3 abhängen, **dadurch gekennzeichnet, dass** die Kippachsen (B, D), die Drehachsen (C, E), die Schwenkachsen (F) und die Krümmungsachse (G) alle im Wesentlichen parallel zueinander und orthogonal zu der Gleitrichtung (A) sind.

10. Vorrichtung (1) nach den Ansprüchen 7 und 8, sofern sie mindestens von Anspruch 2 abhängen, **dadurch gekennzeichnet, dass** die erste Klemmanordnung (3), die zweite Klemmanordnung (4) und das Wiegeelement (9) ausgebildet sind, in einer idealen Klemmposition angeordnet zu sein, wobei:
- die Schwenkachsen (F) und die Drehachsen (C, E) alle im Wesentlichen koplanar und auf einer idealen Bezugsebene (X) liegend angeordnet sind;
- die erste Kippachse (B) und die erste Drehachse (C) im Wesentlichen koplanar und auf einer ersten idealen Liegeebene (Y1) liegend angeordnet sind, die im Wesentlichen orthogonal zu der idealen Bezugsebene (X) ist;
- die zweite Kippachse (D) und die zweite Drehachse (E) im Wesentlichen koplanar und auf einer zweiten idealen Liegeebene (Y2) liegend angeordnet sind, die im Wesentlichen parallel zu der ersten idealen Liegeebene (Y1) und im Wesentlichen orthogonal zu der idealen Bezugsebene (X) ist.

## Revendications

1. - Appareil (1) pour serrer des pièces sur des machines-outils, comprenant :
- au moins un cadre de base (2) pouvant être fixé à une machine-outil (M) pour l'usinage d'au moins une pièce (P) ;
- au moins un premier ensemble de serrage (3) et au moins un second ensemble de serrage (4) associés audit cadre de base (2) de manière mobile d'une position de libération à une position de serrage de ladite pièce (P), selon une course de serrage, et de ladite position de serrage à ladite position de libération, selon une course de libération ;
- au moins un actionneur à fluide (5, 6), comportant une partie fixe (5) associée audit cadre de base (2) et une partie mobile (6) associée à ladite partie fixe (5) d'une manière coulissante selon une direction de coulissement (A) et relié à un ensemble d'entraînement (7) associé auxdits ensembles de serrage (3, 4), ledit actionneur à fluide (5, 6) comprenant au moins une chambre (8) qui peut être alimentée par au moins un fluide sous pression pour déplacer simultanément lesdits ensembles de serrage (3, 4) entre ladite position de libération et ladite position de serrage ;
**caractérisé par le fait que** ledit ensemble d'entraînement (7) comprend au moins un élément basculant (9) articulé audit premier ensemble de serrage (3) et audit second ensemble de serrage (4) et associé de manière rotative à ladite partie mobile (6), qui comprend au moins une surface de poussée incurvée (10) disposée en contact de poussée contre ledit élément basculant (9) pendant ladite course de serrage, ledit élément basculant (9) étant apte à tourner sur ladite surface de poussée incurvée (10).

2. - Appareil (1) selon la revendication 1, **caractérisé par le fait que** ledit élément basculant (9) est articulé audit premier ensemble de serrage (3) et audit second ensemble de serrage (4) autour d'axes d'articulation (F) sensiblement parallèles entre eux et orthogonaux à ladite direction de coulissement (A).

3. - Appareil (1) selon la revendication 2, **caractérisé par le fait que** ladite surface de poussée incurvée (10) a une conformation sensiblement cylindrique avec un axe de courbure (G) sensiblement parallèle auxdits axes d'articulation (F).

4. - Appareil (1) selon une ou plusieurs des revendications précédentes, **caractérisé par le fait que** ledit élément basculant (9) est associé avec jeu à ladite partie mobile (6), qui comprend au moins une surface de récupération (30) disposée en contact de poussée contre ledit élément basculant (9) pendant ladite course de libération.

5. - Appareil (1) selon la revendication 4, **caractérisé par le fait que** ladite surface de récupération (30) est définie par au moins un siège de liaison (31) formé dans ladite partie mobile (6), ledit élément basculant (9) comprenant au moins une broche de liaison (32) ajustée avec jeu dans ledit siège de liaison (31).

6. - Appareil (1) selon une ou plusieurs des revendications précédentes, **caractérisé par le fait que** lesdits ensembles de serrage (3, 4) sont disposés sur ledit cadre de base (2) sur des côtés opposés par rapport audit actionneur à fluide (5, 6).

7. - Appareil (1) selon une ou plusieurs des revendications précédentes, **caractérisé par le fait que** ledit premier ensemble de serrage (3) comprend :
- au moins une première tige de liaison (16) articulée audit cadre de base (2) autour d'un premier axe de basculement (B) ; et
- au moins un premier support (17) articulé à ladite première tige de liaison (16) autour d'un premier axe de rotation (C) sensiblement parallèle audit premier axe de basculement (B).

8. - Appareil (1) selon une ou plusieurs des revendications précédentes, **caractérisé par le fait que** ledit second ensemble de serrage (4) comprend :
- au moins une seconde tige de liaison (22) articulée audit cadre de base (2) autour d'un second axe de basculement (D) ; et
- au moins un second support (23) articulé à ladite seconde tige de liaison (22) autour d'un second axe de rotation (E) sensiblement parallèle audit second axe de basculement (D).

9. - Appareil (1) selon les revendications 7 et 8, lorsqu'il dépend au moins des revendications 2 et 3, **caractérisé par le fait que** lesdits axes de basculement (B, D), lesdits axes de rotation (C, E), lesdits axes d'articulation (F) et ledit axe de courbure (G) sont tous sensiblement parallèles entre eux et orthogonaux à ladite direction de coulissement (A).

10. - Appareil (1) selon les revendications 7 et 8, lorsqu'elles dépendent au moins de la revendication 2, **caractérisé par le fait que** ledit premier ensemble de serrage (3), ledit second ensemble de serrage (4) et ledit élément basculant (9) sont configurés pour être disposés dans une position de serrage idéale dans laquelle :
- lesdits axes d'articulation (F) et lesdits axes de rotation (C, E) sont tous disposés de manière sensiblement coplanaire et se situant sur un plan de référence idéal (X) ;
- ledit premier axe de basculement (B) et ledit premier axe de rotation (C) sont disposés de manière sensiblement coplanaire et se situant sur un premier plan idéal (Y1) sensiblement orthogonal audit plan de référence idéal (X) ;
- ledit second axe de basculement (D) et ledit second axe de rotation (E) sont disposés de manière sensiblement coplanaire et se situant sur un second plan idéal (Y2) sensiblement parallèle audit premier plan idéal (Y1) et sensiblement orthogonal audit plan de référence idéal (X).
